Europäisches Patentamt

European Patent Office

Office européen des brevets

(19)

(11) **EP 0 760 472 B1**

(12) **EUROPÄISCHE PATENTSCHRIFT**

(45) Veröffentlichungstag und Bekanntmachung des Hinweises auf die Patenterteilung:
**12.05.2004 Patentblatt 2004/20**

(51) Int Cl.$^7$: **G01N 13/02**

(21) Anmeldenummer: **96111679.5**

(22) Anmeldetag: **19.07.1996**

(54) **Verfahren zur füllstandsunabhängigen Messung der Oberflächenspannung flüssiger Substanzen**

Procedure for the level-independent measurement of the surface-tension of liquid substances

Procédé pour le mesurage niveau-indépendant de la tension superficielle ou substances liquides

(84) Benannte Vertragsstaaten:
**ES FR GB IT SE**

(30) Priorität: **12.08.1995 DE 19529787**

(43) Veröffentlichungstag der Anmeldung:
**05.03.1997 Patentblatt 1997/10**

(73) Patentinhaber: **E.G.O. Elektro-Gerätebau GmbH**
**75038 Oberderdingen (DE)**

(72) Erfinder:
• **Böttger, Axel, Dr.-Ing.**
**01309 Dresden (DE)**
• **Krolop, Jens, Dipl.-Ing.**
**01189 Dresden (DE)**

• **Münzner, Rainer, Dipl.-Ing.**
**08340 Schwarzenberg (DE)**
• **Schulze, Lothar, Dr.-Ing.**
**01139 Dresden (DE)**

(74) Vertreter: **Patentanwälte**
**Ruff, Wilhelm, Beier, Dauster & Partner**
**Kronenstrasse 30**
**70174 Stuttgart (DE)**

(56) Entgegenhaltungen:
**WO-A-93/09269          DD-C- 125 835**
**DE-A- 4 112 417        DE-C- 4 228 942**
**GB-A- 1 317 200        US-A- 3 780 568**
**US-A- 3 881 344        US-B- 351 735**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung bezieht sich auf ein Verfahren zur Bestimmung und Beeinflussung der Qualität von Lösungen bzw. Flüssigkeiten mit oberflächenaktiven Substanzen z.B. Reinigungslösungen, vorzugsweise bei Wasch- und/oder Spülprozessen für Textilgut, wobei diese vorzugsweise auf die Anwendung in Geräten für den Haushalt gerichtet sind.

Die Wirkung von Tensiden als oberflächenaktive Substanzen z.B. als Reinigungsmittel in Waschlösungen, in Entfetterlösungen zur Oberflächenreinigung beim Feuerverzinken, in Lacken und in anderen technischen Flüssigkeiten läßt sich aus dem Verhalten der Oberflächenspannung der jeweiligen Lösung bestimmen. Dabei unterscheidet man zwischen der statischen und der dynamischen, Messung der Oberflächenspannung. Die statischen Meßverfahren werden vorrangig bei geringen Tensidkonzentrationen unterhalb der kritischen Micellbildungskonzentration (CMC) angewendet. Bei hohen Konzentrationen lassen sich die charakteristischen Eigenschaften von Tensidlösungen, wie z.B. die Konzentration und das Anlagerungsverhalten an Grenzflächen, nur noch mit einer dynamischen Messung der Oberflächenspannung hinreichend genau ermitteln.

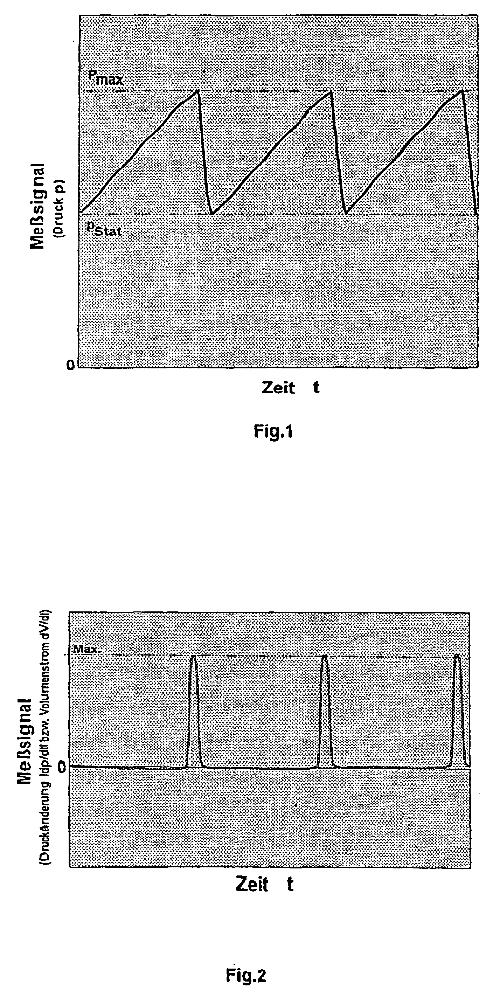

Zur Bestimmung der dynamischen Oberflächenspannung wendet man vorzugsweise das Blasendruckverfahren an, bei dem aus einer Kapillare mi t bekanntem Durchmesser eine Gasblase in die zu untersuchende Flüssigkeit gedrückt wird. Der hierzu erforderliche Gasdruck erreicht ein Druckmaximum $p_{max}$ in jenem Moment, wenn der Blasendurchmesser gleich dem Kapillardurchmesser 2r wird (s. Fig. 1). Die Oberflächenspannung δ ergibt sich aus

$$\delta_{Ao} = (p_{max} - p_{stat})$$

Der statische Druckanteil $p_{stat}$ ist von der Höhe h der Wassersäule über der Kapillare sowie von der Grenzflächenspannung $\delta_G$ in der Kapillare abhängig. Um genaue und reproduzierbare Meßergebnisse zu erhalten, werden deshalb hohe Anforderungen an die Fertigungsqualität der Kapillare, deren Handhabung, Aufbewahrung und Reinigung sowie an die Qualität des Druck erzeugenden Gases (partikelfrei und trocken) gestellt.

So ist z.B. diesbezügliche Labormeßtechnik der Firmen Krüss GmbH und Lauda Dr. R Wobser GmbH & Co. KG bekannt, bei der nach jeder Messung die Kapillare sehr aufwendig in einem Ultraschallbad bzw. in Chrom-Schwefelsäure gereinigt werden muß oder ein vollständiger Wechsel der Kapillare erfolgt. Die Handhabung dieser Labormeßtechnik ist relativ kompliziert, so daß diese Technik sehr kostenintensiv ist und sich weder für das Automatisieren technischer Reinigungsprozesse noch für eine Anwendung in wasserführenden Geräten im Haushaltsbereich eignet.

Aus der DE-OS 41 12 417 ist eine technische Lösung für ein automatisiertes Meßsystem für das Bestimmen der optimalen Waschmittelkonzentration in Testwaschmaschinen bekannt.
Die Grundlage für diese technische Lösung bildet das vorgenannte Verfahrensprinzip.
Es wird hier aus dem Maximaldruck $p_{max}$ und dem hydrostatischen Druckanteil mit einem Differenzdruck-Sensor die Druckdifferenz $\Delta p = p_{max} - p_{hydrostat}$ gemessen (Fig. 1).
Das elektrische Meßsignal ist somit direkt vom Druck $\Delta p$ abhängig.
Zum Erfassen des hydrostatischen Druckanteils $p_{hydrostat}$ ist eine zweite Kapillare mit größerem Durchmesser und gleicher Eintauchtiefe notwendig, deren Volumenstrom über ein zusätzliches Ventil geregelt wird.
Die optimale Waschmittelkonzentration ist dann erreicht, wenn die berechnete Waschmittelwirkung bei Zugabe des Waschmittels nicht mehr zunimmt. Die Waschmittelwirkung (Wert 2 abzüglich Wert 1) geteilt durch Wert 2 ergibt sich aus der mit einem Tensi ometer gemessenen Waschmittelkonzentration der Waschflüssigkeit (Wert 1) und aus der durch die zugegebene Waschmittelmenge entstehenden Konzentration (Wert 2). Zum Bestimmen der Waschmittelkonzentration der Waschflüssigkeit muß der Zusammenhang zwischen Waschmittelkonzentration und Oberflächenspannung für das Waschmittel bei der jeweils eingestellten Waschtemperatur bekannt sein. Für ein Waschmittel mit unbekanntem Verhalten zwischen Oberflächenspannung, Temperatur und Konzentration ist das beschriebene Verfahren nicht anwendbar. Es muß stets zuerst eine Kalibrierkurve für das eingesetzte Waschmittel experimentell mit einem Tensiometer ermittelt werden.
Ein universelles Anwenden dieses beschriebenen Verfahrens ist somit für eine genaue und automatische Waschmitteldosierung, insbesondere in Haushaltwaschmaschinen nicht möglich, da unterschiedlichste Waschmittel mit unbekannten Eigenschaften zum Einsatz kommen können.
Eine Beschränkung auf wenige Waschmittel, deren Kalibrierkurven bekannt sind, ist für den Anwender unzweckmäßig und begrenzt seine Entscheidungsfreiheit bei der Auswahl des Waschmittels.

Es kommt hinzu, daß Störungen des Blasenabrisses, hervorgerufen durch den Blasenabriß an der zweiten Kapillare, an der Meßkapillare entstehen können. Ebenso können Störungen des Blasenabrisses entstehen, weil der Abriß der Luftblase an der Meßkapillare gegen die Auftriebskraft gerichtet ist. Ferner können Veränderungen der Grenzflächenspannung $\delta_G$ innerhalb der Meßkapillare die Reproduzierbarkeit der Meßergebnisse sehr stark beeinträchtigen. Weiterhin wird der Aufwand der vorgenannten technischen Lösung auf Grund der zweiten Kapillare, die eine separate Steuereinrichtung des Gasstromes, inclusive Ventil benötigt, wesentlich erhöht, was z.B. wiederum zu einer wesentlichen Überschreitung eines für Haushaltwaschmaschinen üblichen Kostenrahmens führen würde.

Alle bisher bekannten Verfahren und Einrichtungen zum Bestimmen der Oberflächenspannung messen den Druck bzw. die Druckdifferenz als Absolutwert, wozu relativ Kosteni ntensi ve Drticksensoren mit einer sehr genauen Kalibrierung erforderlich sind.

Auf dem Gebiet der Textil- und Geschirreinigung, insbesondere im Haushaltsbereich, sind bis zum jetzigen Zeitpunkt noch keine wirtschaftlichen und marktfähigen Lösungen bekannt, welche es gestatten, die Oberflächenspannung tensidhaltiger Wasch- und Spülflüssigkeiten zu messen.

Die Aufgabe, die durch die Erfindung gelöst werden soll, besteht darin, ein Verfahren zu schaffen, mit dem die Konzentration tensidhaltiger Lösungen durch die Messung der Oberflächenspannung automatisch und unabhängig vom verwendeten Reinigungsbzw. Waschmittel gesteuert werden kann.

Diese Aufgabe wird durch die im Anspruch 1 angegebenen Merkmale gelöst.

Der wesentliche Vorteil des erfindungsgemäßen Verfahrens gegenüber den bekannten technischen Lösungen besteht darin, daß durch die Messung der ersteh Ableitung des Blasendrucks nach der Zeit dp/dt (s. Fig. 2) kostengünstige Schalldruckwandler als Sensoren zum Bestimmen der Oberflächenspannung tensidhaltiger Lösungen eingesetzt werden können. Vorteilhaft ist dabei die Füllstandsunabhängigkeit des Meßverfahrens, so daß dessen Anwendung bei unterschiedlichen Füllständen z.B. während des Waschund Spülprozesses in Waschmaschinen problemlos möglich ist. Die Füllstandsunabhängigkeit ergibt sich aus der verfahrensbedingten Differentiation des statischen Druckanteils $p_{stat}$ während der Messung mit $dp_{stat}/dt = 0$. Das Meßsignal ist somit proportional zur ersten Ableitung des Blasendruckes nach der Zeit dp/dt, aus der sich mittels Integration (mittels Meßverstärker oder softwaremäßig) der Blasendruck p bzw. der maximale Differenzdruck $\Delta p_{max}$ ($\Delta p_{max} = p_{max} - p_{stat}$) sowie der Oberflächenspannung $\delta_{Ao}$ aus $\delta_{Ao} = r \times p_{max}/2$ berechnen läßt. Ebenso ist es möglich, mittels der Kalibrierkurve $\delta_{Ao} = f(|dp/dt|_{max})$ des Sensors die Oberflächenspannung ohne Integration direkt aus dem Signal des Schalldruckwandlers zu bestimmen.

Die Anwendung des erfindungsgemäßen Verfahrens ermöglicht einerseits, daß nur die objektiv notwendige Waschmittelmenge eines beliebigen Waschmittels der Waschflotte zugegeben wird und daß andererseits der Spülvorgang nur solange durchgeführt werden braucht, bis der Tensidgehalt der Spülflotte eine für Mensch und Umwelt unbedenkliche Konzentration erreicht hat.

Verfahrens-seitig ist der Einsatz einer Meßdüse in der Meßzelle von wesentlichem Vorteil hinsichtlich einer störungsfreien Punktion der Meßeinrichtung. Bedingt durch die kleine Länge der Düsendurchgangsöffnung bleibt bei dieser Anordnung die störende Wirkung grenzflächenspannungsabhängiger Kapillarkräfte, wie sie bei den zum Stand der Technik zu zählenden Meßverfahren mit Kapillaren auftreten können, ohne wesentlichen Einfluß. In der Meßzelle erfolgt die Anordnung der Düse nach oben gedichtet, so daß die Abrißrichtung der natürlichen Auftriebsrichtung der Gasblasen entspricht, wodurch Meßfehler verringert werden.

Diese Anordnung ermöglicht es ferner, wahlweise weitere Meßelektroden z.B. für die Messung der Leitfähigkeit oder auch ein oder mehrere Heizelemente in dieser Meßzelle zu installieren. Die geschaffene Speichermöglichkeit der Meßwerte der Oberflächenspannung gewährleistet weiterhin eine sehr genaue Dosierung der zuzugebenden Waschmittelmengen, wodurch wiederum eine sehr genaue Einhaltung der vorgegebenen Flotten-Konzentrationsgrenzen ermöglicht wird.

Das Verfahren ist technisch und wirtschaftlich so ausgelegt, daß ein serienmäßiger Einsatz in Textiloder Geschirrreinigungsmaschinen, insbesondere im Haushaltsbereich möglich wird.

Weitere vorteilhafte Ausgestaltungen und Weiterbildungen der Erfindung sind aus den Unteransprüchen und aus dem nachfolgenden anhand der Zeichnung prinzipmäßig beschriebenen Ausführungsbeispiel ersichtlich.

Es zeigt

Fig. 1 eine graphische Darstellung des Meßsignales des Blasenabrisses bei der Druckmessung mit herkömmlichen Meßverfahren,

Fig. 2 das Meßsignal des Blasenabrisses bei Messung mit einem Schalldruckwandler bzw. mit einem Volumenstrom-Sensor,

Fig. 3 die Abnahme der Meßgrößen |dp/dt| max bzw. dV/dt max in Abhängigkeit von der zugegebenen Waschmittelmenge,

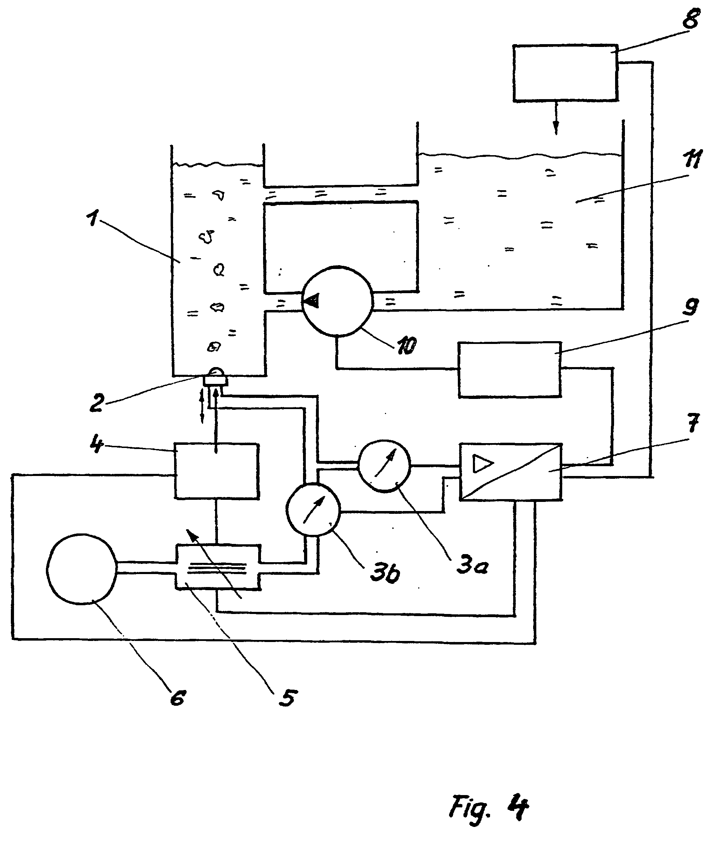

Fig. 4 eine prinzipielle, schematische Anordnung für die Durchführung des Verfahrens.

Ei ne Meßzelle 1 mit einer eingebauten Meßdüse 2 ist über eine Düsenreinigungs-Einrichtung 4 mit einer Volumenstrom-Regeleinrichtung 5 verbunden. Eine Volumenstromquelle 6 dient dem Erzeugen eines gasförmigen Volumenstromes, welcher nach dem Durchströmen der Volumenstrom-Regeleinrichtung 5 und der Düsenreinigungs-Einrichtung 4 direkt durch die Meßdüse 2 in die Meßzelle 1 gelangt. Des weiteren ist die Meßzelle 1 - in diesem Ausführungsbeispiel über eine Pumpe 10 - mit dem Laugenbehälter 11 einer Waschmaschine oder einer Geschirrspülmaschine verbunden. Dies kann ggf. auch der Flottenspeicher-, ein sonstiger Laugenaufbereitungsbehälter der Wasch- oder Geschirrspülmaschine oder ein sonstiger Behälter mit Reinigungsflüssigkeit sein.

Die Pumpe 10 wird durch das Programmsteuergerät 9 der Maschine gesteuert.

Die Zufuhr des in der Volumenstromquelle 6 erzeugten gasförmigen Volumenstromes zur Meßdüse 2 ist mit einem Schalldruckwandler 3a verbunden, der z.B. nach dem Elektret- bzw. Kondensatorprinzip die erste Ableitung des entstehenden Blasendruckes in ein elektrisches Signal umwandelt. Alternativ dazu kann anstelle des Schalldruck-Wandlers 3a auch ein Volumenstrom-Sensor 5b in die Zuführung des gasförmigen Volumenstromes zur Meßdüse 2 geschaltet werden, der ein dem Volumenstrom proportionales elektrisches Meßsignal liefert.

Eine Elektronikeinheit 7 ist mit dem Schalldruckwandler 3a, der Düsenreinigungs-Einrichtung 4, der Volumenstrom-Regeleinrichtung 5, einer Waschmittel-Dosiereinrichtung 8 sowie dem Programmsteuergerät 9 der Maschine verbunden.

Das erfindungsgemäße verfahren kann beispielsweise, wie nachfolgend beschrieben, ablaufen:

Die Pumpe 10 erhält vom Programmsteuergerät 9 ein Signal und fördert eine bestimmte Menge der zu messenden Flüssigkeit aus dem Laugenbehälter 11 in die Meßzelle 1. Anschließend wird die Pumpe 10 durch ein Signal vom Programmsteuergerät 9 abgeschaltet und der Meßprozeß über das Programmsteuergerät 9 und die Elektronikeinheit 7 gestartet, indem von der Volumenstromquelle 6 ein gasförmiger Volumenstrom erzeugt, mittels der Volumenstrom-Regeleinrichtung 5 auf einen konstanten Wert eingestellt und durch die Meßdüse 2 hindurch in die Meßzelle 1 gefördert wird. Die entstehende Blasenfrequenz, hervorgerufen durch den aus der Meßdüse 2 austretenden gasförmigen Volumenstrom, wird durch den Schalldruckwandler 3a oder den Volumenstromsensor 3b erfaßt und als elektrisches Signal der Elektronikeinheit 7 zugeführt. Dort wird die aktuelle Blasenfrequenz mit einem vorgegeben Sollwert verglichen und bei einer Abweichung mit der Volumenstrom-Regeleinrichtung 5 nachgeregelt.

Entspricht die Blasenfrequenz dem vorgegebenen Sollwert, wird die Messung durch die Elektronikeinheit 7 gestartet. Die Messung des Maximalwertes des Betrages der ersten Ableitung des Blasendruckes $|dp/dt|_{max}$ erfolgt bei stehender zu messender Meßflüssigkeit, d.h. die Pumpe 10 ist, wie zuvor erwähnt, ausgeschaltet. Nach Beendigung dieses Meßvorganges schaltet das Programmsteuergerät 9 die Pumpe 10 nach einem Signal von der Elektronikeinheit 7 wieder, ein.

Gleichzeitig steuert die Elektronikeinheit 7 den ersten Dosiervorgang der Waschmittel-Dosiereinrichtung 8.

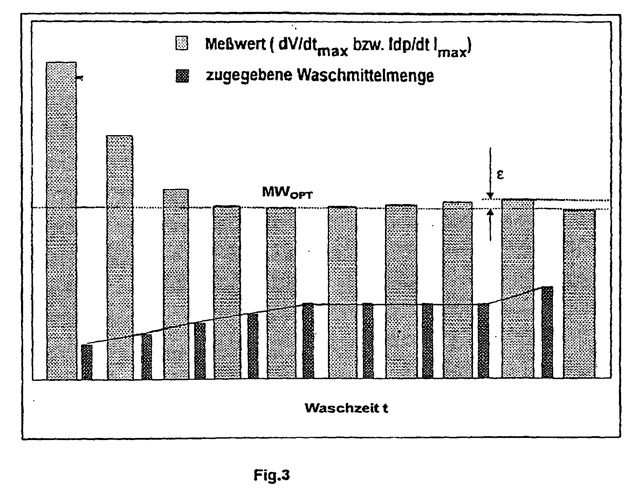

Es wird so die erste Waschmittelportion der Flüssigkeit zugegeben. Durch Umpumpen der Flüssigkeit oder einem bestimmten Dreh-Rhythmus der Waschtrommmel wird eine entsprechende Verteilung des Waschmittels bzw. Homogenisierung der Flotte erreicht. Der Meßvorgang wird durch die Elektronikeinheit 7 erneut gestartet. Die Dosierung des Reinigungs- bzw. Waschmittels erfolgt vorzugsweise in einzelnen Portionen nacheinander. Nach Beendigung dieser Messung wird der aktuelle Meßwert mit dem Meßwert vor der Zugabe der Waschmittelportion - im weiteren Programmablauf vor Zugabe der letzten Waschmittelportion - verglichen. Ist der aktuelle Meßwert kleiner als der vorangegangene Meßwert, erfolgt über die Waschmittel-Dosiereinrichtung 8 die Zugabe einer weiteren Waschmittelportion. Dieser Vergleich wird so oft wiederholt, bis keine wesentliche Abnahme der Meßwerte bzw. der Oberflächen-Spannung mehr erfolgt. In diesem Fall erfolgt keine weitere Zugabe von Waschmittel, d.h. es ist eine optimale Konzentration des Reinigungs- bzw. Waschmittels (MW opt) erreicht (Fig. 3).

Der Meßprozeß wird jedoch in gewissen Zeitabständen wiederholt, denn durch den anschließenden Reinigungsprozeß wird Reinigungsmittel verbraucht und die Oberflächenspannung nimmt zu. In diesem Fall 1 wird bei übersteigen eines vorgegebenen Grenzwertes ε, z.B. bezogen auf den Meßwert nach der letzten Zugabe des Reinigungsmittels, erneut Reinigungsmittel zugegeben, bis die optimale Konzentration (MW opt) wieder erreicht ist.

Voraussetzung dafür ist eine Temperaturkonstanz der Wasch- oder Reinigungslösung während des Meß- und Dosierprozesses, was sich z.B. mit einem regelbaren Heizelement realisieren läßt. Besitzt die Reinigungslösung z.B. aufgrund eines großen Volumens eine hinreichend große Wärmekapazität, so daß die Temperatur der Flüssigkeit ausreichend stabil 1 bleibt, läßt sich eine Temperaturregelung vermeiden. In beiden Fällen ist es möglich, die Reinigungslösung in Intervallen zwischen den Dosierprozessen aufzuheizen, um die Dauer des Gesamtprozesses zu verkürzen. Dabei ist jedoch als Bezug für eine Veränderung der Oberflächenspannung durch den nachfolgenden Dosiervorgang eine Messung nach der Beendigung des Heizintervalls, vor dem Dosieren des Reinigungsmittels durchzuführen. Durch diesen Ablauf wird gewährleistet, daß immer eine ausreichend waschaktive Flotte für den Reinigungsprozeß zur Verfügung steht, aber nicht mehr Waschmittel als unbedingt erforderlich, der Flotte zugegeben wird und somit der subjektive Faktor bei der Waschmitteldosierung durch die bedienende Person weitestgehend ausgeschlossen wird.

Bei einem sich anschließenden Spülabschnitt wird ebenfalls dieser Meßprozeß angewendet, nur jetzt im umgekehrten Sinn, d.h., wenn der Meßwertvergleich zwischen dem Meßwert vor der ersten Wasch- bzw. Reinigungsmittelzugabe und dem aktuellen (letzten) Meßwert einen bestimmten vorgegebenen Grenzwert als unterschritten festgestellt hat, kann über die Elektronikeinheit 7 und das Programmsteuergerät 9 der Spülvorgang vorzeitig beendet werden.

Die Elektronikeinheit 7 steuert somit die Waschmittel-Dosiereinrichtung 8 und die Volumenstrom-Regeleinrichtung 5 und empfängt, verarbeitet, vergleicht und speichert die Meßsignale des Schalldruckwandlers 3a bzw. des Volumenstrom-Sensors 3b. Weiterhin steuert die Elektronikeinheit 7 die Düsenreinigungs-Einrichtung 4, welche zu vorgegebenen Zeitpunkten die Meßdüse 2 automatisch, z.B. mittels einer Reinigungsnadel, reinigt. Der Antrieb dieser Düsenreinigungs-Einrichtung 4 kann in die Volumenstrom-Regeleinrichtung 5 integriert sein, so daß z.B. bei Verwendung eines linearen Schrittmotors als Antrieb, mit der einen Bewegungsrichtung die Ventilfunktion der Volumenstrom-Regeleinrichtung 5 und mit der anderen Bewegungsrichtung die Reinigungsfunktion der Düsenreinigungs-Einrichtung 4 realisiert wird. Die Düsenreinigungs-Einrichtung 4 dient des weiteren auch zum Verschließen der öffnung der Meßdüse 2 (im Havariefall selbsttätig), so daß während des Durchströmens der Meßzelle 1 oder im Havariefall (z.B. bei Netzausfall) keine Waschflüssigkeit in die Meßdüse 2 sowie in die Zuführung zum Schalldruckwandler 3a bzw. zum Volumenstrom-Sensor 3b eindringen kann.

**Patentansprüche**

1. Verfahren zur füllstandsunabhängigen Bestimmung der Oberflächenspannung flüssiger Substanzen, vorzugsweise geeignet zur Bestimmung und Beeinflussung der Qualität von Flotten beim Waschen und/ oder Spülen von Textilgut Faserstoffen oder Ähnlichem mit einer wässrigen, Tenside oder andere oberflächenaktive Substanzen enthaltene Flüssigkeit, wobei nach dem Blasendruckverfahren ein gasförmiger Volumenstrom in die zu messende Flüssigkeit eingeleitet und während der Blasenlebensdauer die erste Ableitung des Blasendruckes nach der Zeit gemessen wird.

2. Verfahren nach Anspruch 1,
   **dadurch gekennzeichnet,**
   **dass** die Oberflächenspannung aus dem Maximalwert der Integration des zeitlichen Verlaufs der ersten Ableitung des Blasendruckes nach der Zeit oder aus der Differenz.zwischen dem Maximal- und dem Minimalwert der Integration des zeitlichen Verlaufs der ersten Ableitung des Blasendruckes nach der Zeit bestimmt wird.

3. Verfahren nach Anspruch 1,
   **dadurch gekennzeichnet, daß** der Volumenstrom in die in einem Behälter befindliche Meßflüssigkeit oder nur in einen Teil der Meßflüssigkeit eingeleitet wird, der sich außerhalb dieses Behälters, vorzugsweise in einem separaten Behälter befindet.

4. Verfahren nach Anspruch 1 oder 2,
   **dadurch gekennzeichnet, daß** vorzugsweise eine Teilmenge der zu messenden Flüssigkeit umlaufend ist und in diese Teilmenge oder in einen Teil dieser Teilmenge der gasförmige Volumenstrom eingeleitet wird.

5. Verfahren nach einem der Ansprüche 1 bis 4,
   **dadurch gekennzeichnet,**
   **dass** die erste Ableitung des Blasendruckes nach der Zeit durch einen dynamischen akustischen Sensor, wie einen Schalldruckwandler (3) nach dem Elektron-Prinzip, nach dem Kondensatormikrophon-Prinzip oder nach dem Tauchspulenmikrophon-Prinzip, gemessen wird.

6. Verfahren nach Anspruch 1 bis 4,
   **dadurch gekennzeichnet, daß** Veränderungen der Oberflächenspannung der zu untersuchenden Flüssigkeit vorzugsweise kontinuierlich aus der Differenz zweier aufeinanderfolgender Meßwerte bestimmt werden.

7. Verfahren nach Anspruch 1 bis 5,
   **dadurch gekennzeichnet, daß** das Waschmittel diskontinuierlich oder auch kontinuierlich in einzelnen Portionen der Flotte zugegeben wird und nach jeder Waschmittelzugabe die Änderung (Abnahme) der Oberflächenspannung gegenüber den Meßwerten vor jeder Waschmittelzugabe bestimmt und die Zugabe von Waschmittel beendet wird, wenn die Oberflächenspannung nicht mehr wesentlich abnimmt.

8. Verfahren nach Anspruch 1 bis 6,
   **dadurch gekennzeichnet, daß** während des Verfahrensablaufes, anhand des Wertes der Änderung der Oberflächenspannung der Zeitpunkt für die Zugabe und die Menge des zuzugebenden Waschmittels bestimmt werden und daß diese Waschmittelmenge der Flotte zugegeben wird.

9. Verfahren nach Anspruch 1 bis 7,
   **dadurch gekennzeichnet, daß** nach Beendigung der Waschmittelzugabe der Waschvorgang fortgesetzt und die Oberflächenspannung vorzugsweise diskontinuierlich gemessen wird und eine erneute Zugabe von Waschmittel erfolgt, wenn die Oberflächenspannung gegenüber den Meßwerten nach der letzten Waschmittelzugabe um einen festgelegten Grenzwert angestiegen ist.

10. Verfahren nach einem der vorstehenden Ansprüche,
    **dadurch gekennzeichnet,**
    **dass** der gasförmige Volumenstrom mittels einer Messdüse (2) in die zu messende Flüssigkeit eingeleitet wird, deren Ausströmöffnung in Richtung der Auftriebskraft der austretenden Gasblasen weisend angeordnet ist, und wobei vorzugsweise die Länge der Durchgangsöffnung in der Messdüse (2) gleich oder kleiner ist als deren Durchmesser.

## Claims

1. Method for determining the surface tension of liquid substances independently of filling level, preferably suitable for determining and influencing the quality of liquors during the washing and/or rinsing of textile materials, fibrous materials or the like with an aqueous liquid containing tensides or other surface-active substances, a gaseous volume flow being introduced into the liquid to be measured according to the bubble-pressure method and the first derivation of the bubble pressure being measured according to time during the bubble lifetime.

2. Method according to Claim 1, **characterized in that** the surface tension is determined from the maximum value of the integration of the time profile of the first derivation of the bubble pressure according to time or from the difference between the maximum and the minimum value of the integration of the time profile of the first derivation of the bubble pressure according to time.

3. Method according to Claim 1, **characterized in that** the volume flow is introduced into the measuring liquid located in a container or only into a part of the measuring liquid which is located outside this container, preferably in a separate container.

4. Method according to Claim 1 or 2, **characterized in that** preferably a part-quantity of the liquid to be measured is in circulation and the gaseous volume flow is introduced into this part-quantity or into part of this part-quantity.

5. Method according to one of Claims 1 to 4, **characterized in that** the first derivation of the bubble pressure according to time is measured by means of a dynamic acoustic sensor, such as a sound-pressure converter (3), on the electret principle, on the capacitor microphone principle or on the moving-coil microphone principle.

6. Method according to Claims 1 to 4, **characterized in that** variations in the surface tension of the liquid to be investigated are determined preferably continuously from the difference of two successive measured values.

7. Method according to Claims 1 to 5, **characterized in that** the washing agent is added to the liquor in individual portions discontinuously or else continuously, and, after each addition of washing agent, the change (decrease) in the surface tension, as compared with the measured values before each addition of washing agent, is determined, and the addition of washing agent is ended when the surface tension no longer decreases appreciably.

8. Method according to Claims 1 to 6, **characterized in that** the time point for the addition and the quantity of washing agent to be added are determined during the method sequence on the basis of the value of the change in the surface tension, and **in that** this washing-agent quantity is added to the liquor.

9. Method according to Claims 1 to 7, **characterized in that**, after the end of the addition of washing agent, the washing operation is continued and the surface tension is measured preferably discontinuously, and a renewed addition of washing agent takes place when the surface tension has risen by a fixed limit value, as compared with the measured values after the last addition of washing agent.

10. Method according to one of the preceding claims, **characterized in that** the gaseous volume flow is introduced into the liquid to be measured by means of a measuring nozzle (2), the outflow orifice of which is arranged so as to point in the direction of the lifting force of the emerging gas bubbles, the length of the passage orifice in the measuring nozzle (2) preferably being equal to or smaller than the diameter of the latter.

## Revendications

1. Procédé de détermination indépendamment du niveau de la tension superficielle de substances liquides, convenant de préférence pour déterminer et influencer la qualité des bains lors du lavage et/ou du rinçage de produits textiles, de matières fibreuses ou similaires avec un liquide aqueux contenant des agents de surface ou d'autres substances tensioactives, un débit volumique gazeux étant induit dans le liquide à mesurer d'après le procédé de la pression de bulle et la première dérivée de la pression de bulle étant mesurée en fonction du temps pendant la durée de vie de la bulle.

2. Procédé selon la revendication 1, **caractérisé en ce que** la tension superficielle est déterminée à partir de la valeur maximale de l'intégration de l'évolution dans le temps de la première dérivée de la pression de bulle en fonction du temps ou à partir de la différence entre la valeur maximale et la valeur minimale de l'intégration de l'évolution dans le temps de la première dérivée de la pression de bulle en fonction du temps.

3. Procédé selon la revendication 1, **caractérisé en ce que** le débit volumique est induit dans le liquide de mesure qui se trouve dans un réservoir ou seulement dans une partie du liquide de mesure qui se trouve à l'extérieur de ce réservoir, de préférence dans un réservoir séparé.

**4.** Procédé selon la revendication 1 ou 2, **caractérisé en ce qu'**une quantité de préférence partielle du liquide à mesurer est mise en circulation et le débit volumique gazeux est induit dans cette quantité partielle ou dans une partie de cette quantité partielle.

**5.** Procédé selon l'une des revendications 1 à 4, **caractérisé en ce que** la première dérivée de la pression de bulle en fonction du temps est mesurée par un capteur acoustique dynamique, par exemple un convertisseur de pression acoustique (3) selon le principe de l'électret, selon le principe du microphone à condensateur ou selon le principe du microphone électrodynamique.

**6.** Procédé selon les revendications 1 à 4, **caractérisé en ce que** les modifications de la tension superficielle du liquide à analyser sont de préférence déterminées continuellement à partir de la différence entre deux valeurs mesurées successives.

**7.** Procédé selon les revendications 1 à 5, **caractérisé en ce que** le produit de lavage est ajouté au bain de manière discontinue ou aussi continue en portions individuelles et la modification (diminution) de la tension superficielle par rapport aux valeurs mesurées avant chaque apport de produit de lavage est déterminée après chaque apport de produit de lavage et l'apport de produit de lavage est arrêté lorsque la tension superficielle ne diminue plus de manière importante.

**8.** Procédé selon les revendications 1 à 6, **caractérisé en ce que** le moment de l'apport et la quantité de produit de lavage à ajouter sont déterminés pendant le déroulement du procédé à l'aide de la valeur de la modification de la tension superficielle et que cette quantité de produit de lavage est ajoutée au bain.

**9.** Procédé selon les revendications 1 à 7, **caractérisé en ce que** l'opération de lavage se poursuit et la tension superficielle est mesurée de préférence de manière discontinue après la fin de l'apport de produit de lavage et un nouvel apport de produit de lavage a lieu si la tension superficielle a augmenté d'une valeur limite donnée par rapport aux valeurs mesurées après le dernier apport de produit de lavage.

**10.** Procédé selon l'une des revendications précédentes, **caractérisé en ce que** le débit volumique gazeux est induit dans le liquide à mesurer au moyen d'une buse de mesure (2) dont l'orifice de sortie est disposé de manière à être dirigé dans le sens de la force portante de la bulle de gaz qui en sort et avec lequel la longueur de l'orifice de passage dans la buse de mesure (2) est de préférence égale ou inférieure à son diamètre.

Fig.1

Fig.2

Fig.3

Fig. 4